# FASCICULE DE BREVET EUROPEEN

(11) **EP 1 185 913 B1**
(45) Date de publication et mention de la délivrance du brevet: **07.03.2007**
(21) Numéro de dépôt: 00922767.9
(22) Date de dépôt: 27.04.2000
(51) Int. Cl.: G06F 21/00

(54) **PROCEDE POUR SECURISER L'UTILISATION D'UN LOGICIEL A PARTIR D'UNE UNITE DE TRAITEMENT ET DE MEMORISATION D'UN SECRET ET SYSTYME EN FAISANT APPLICATION**
VERFAHREN ZUR SICHERUNG VON SOFTWAREANWENDUNGEN MIT HILFE EINER EINHEIT ZUR VERARBEITUNG UND SPEICHERUNG GEHEIMER DATEN UND SYSTEM DAFÜR
METHOD FOR SECURING THE USE OF SOFTWARE FROM A CENTRAL PROCESSING UNIT AND SECRET STORAGE UNIT AND SYSTEM THEREFOR

(30) Priorité: 28.04.1999 FR 9905569
(43) Date de publication de la demande: 13.03.2002
(73) Titulaire: VALIDY, 26100 Romans sur Isère (FR)
(72) Inventeur: CUENOD, Jean-Christophe, F-78360 Montesson (FR); SGRO, Gilles, F-26300 Bourg de Péage (FR)
(74) Mandataire: Thibault, Jean-Marc
(86) Numéro de dépôt international: PCT/FR2000/001120
(87) Numéro de publication internationale: WO 2000/067093

(56) Documents cités:
- EP-A- 0 191 162
- EP-A- 0 768 601
- EP-A- 0 795 809
- "DEA-BASED PSEUDORANDOM NUMBER GENERATOR" IBM TECHNICAL DISCLOSURE BULLETIN,US,IBM CORP. NEW YORK, vol. 35, no. 1B, 1 juin 1992 (1992-06-01), pages 431-434, XP000309126 ISSN: 0018-8689

## Description

### DOMAINE TECHNIQUE :

La présente invention concerne le domaine technique des systèmes de traitement de données au sens général et elle vise, plus précisément, les moyens pour sécuriser l'utilisation d'un programme ou d'un logiciel fonctionnant sur lesdits systèmes de traitement de données.

L'objet de l'invention vise, plus particulièrement, les moyens pour sécuriser l'utilisation d'un logiciel à partir d'une unité de traitement et de mémorisation d'un secret, désignée communément par carte à puce.

### TECHNIQUE ANTERIEURE :

Dans le domaine technique ci-dessus, le principal inconvénient concerne l'emploi non autorisé de logiciels par des utilisateurs n'ayant pas acquitté des droits de licence. Cette utilisation illicite de logiciels cause un préjudice manifeste pour les éditeurs et les distributeurs de logiciels. Pour éviter de telles copies illicites, il a été proposé dans l'état de la technique diverses solutions pour protéger des logiciels. Ainsi, il est connu une solution de sécurisation consistant à mettre en oeuvre un système matériel de protection, tel qu'un élément physique appelé clé de protection ou "dongle" en terminologie anglo-saxonne. Une telle clé de protection devrait garantir à l'éditeur du logiciel l'exécution du logiciel uniquement en présence de la clé.

Or, il doit être constaté qu'une telle solution est inefficace car elle présente l'inconvénient d'être facilement contournable. Une personne mal intentionnée, ou pirate peut, à l'aide d'outils spécialisés, tels que des désassembleurs, supprimer les instructions de contrôle. Il devient alors possible de réaliser des copies illicites correspondant à des versions modifiées des logiciels n'ayant plus aucune protection. De plus, cette solution ne peut pas être généralisée à tous les logiciels, dans la mesure où il est difficile de connecter plus de deux clés de protection sur une même machine.

La demande de brevet **EP 0 191 162** décrit un procédé pour assurer le cryptage d'un logiciel pour éviter une utilisation non autorisée. Un tel procédé consiste à encrypter le programme à l'aide d'une clé unique, à l'enregistrer sur un support de distribution, à utiliser pour l'exécution du programme, un ordinateur comportant une mémoire protégée et des moyens cryptographiques protégés incluant une clé secrète unique pour cet ordinateur. Le procédé consiste à fournir à l'utilisateur du programme, un mot de passe secret unique dépendant de la clé du programme et de la clé de l'ordinateur, afin que l'ordinateur puisse décrypter et exécuter le programme dans sa mémoire protégée. Selon une seconde forme de réalisation, une carte à puce possédant une clé unique peut être associée à l'ordinateur, de sorte que dans ce cas, le mot de passe secret unique fourni à l'utilisateur dépend de la clé du programme et de la clé de la carte à puce.

L'inconvénient majeur de ce procédé est de nécessiter pour l'utilisation du programme, un ordinateur ayant une mémoire protégée. Or, les ordinateurs standards ne possèdent pas une telle caractéristique, ce qui limite considérablement le déploiement de ce procédé.

Un autre inconvénient est sa mise en oeuvre pratique nécessitant, de la part de l'utilisateur, la démarche de demander à un centre de distribution de mots de passe, le mot de passe correspondant au programme et dépendant de l'ordinateur ou de la carte à puce de l'utilisateur.

Un autre inconvénient de ce procédé est de nécessiter autant de secrets qu'il y a de cartes à puce et d'obliger le centre de distribution des mots de passe à gérer tous ces secrets.

### EXPOSE DE L'INVENTION :

L'objet de l'invention vise à remédier aux inconvénients de la technique antérieure en proposant un procédé pour sécuriser l'utilisation d'un logiciel à partir d'une unité de traitement et de mémorisation d'un secret, conçu pour être mis en oeuvre sur un ordinateur standard, et ne nécessitant aucune démarche de l'utilisateur auprès d'un centre de distribution de mots de passe.

Pour atteindre un tel objectif, le procédé selon l'invention vise à sécuriser l'utilisation d'un logiciel à partir d'au moins une unité de traitement et de mémorisation d'au moins un secret, le logiciel fonctionnant sur un système de traitement de données.

Un tel procédé est défini dans la revendication indépendante 1.

Le procédé selon l'invention ne repose pas sur un encryptage du logiciel avant sa distribution mais, plutôt sur une modification des données générées lors de l'utilisation du logiciel. L'utilisation d'une unité de traitement et de mémorisation d'un secret permet de modifier de manière non prédictible, les données et de reconstituer les données originales en vue de les utiliser. Il est à noter que l'unité de traitement et de mémorisation est fournie lors de l'achat du logiciel et que l'utilisateur n'a aucune démarche à effectuer auprès d'un organisme distribuant des mots de passe.

Le procédé selon l'invention permet ainsi de sécuriser l'utilisation d'un logiciel par la mise en oeuvre d'une unité de traitement et de mémorisation d'un secret, qui présente la particularité de conserver l'information confidentielle même après plusieurs utilisations du secret. Il apparaît ainsi que toute version dérivée du logiciel tentant de fonctionner sans l'unité de traitement et de mémorisation correspondante, est incapable de générer ou de se servir des données produites par le logiciel original dans la mesure où le secret contenu dans l'unité de traitement et de mémorisation est hors d'atteinte. L'utilisation d'un tel secret permet de modifier de manière non prédictible le format de stockage des données, de sorte que l'utilisation des données modifiées ne permet pas d'obtenir un fonctionnement correct du logiciel si l'utilisateur ne possède pas le secret. L'objet de l'invention trouve une application particulièrement avantageuse, notamment dans les cas de logiciels permettant l'échange de données, comme par exemple, des logiciels d'édition ou d'archivage.

Un autre aspect de l'invention est un dispositif tel que défini dans la revendication indépendante 10. D'autres modes de réalisation de l'invention sont spécifiés dans les revendications dépendantes attenantes.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **fig. 1** est un schéma illustrant un exemple de réalisation matérielle permettant la mise en oeuvre de l'objet de l'invention.
Les **fig. 2A** et **2B** sont des schémas de principe respectivement de génération de données modifiées associées à un logiciel, et de reconstitution des données originales, selon une première variante de réalisation.
Les **fig. 3A et 3B** sont des schémas de principe respectivement de génération de données modifiées, et de reconstitution des données originales selon une deuxième variante de réalisation.

### MEILLEURE MANIERE DE REALISER L'INVENTION

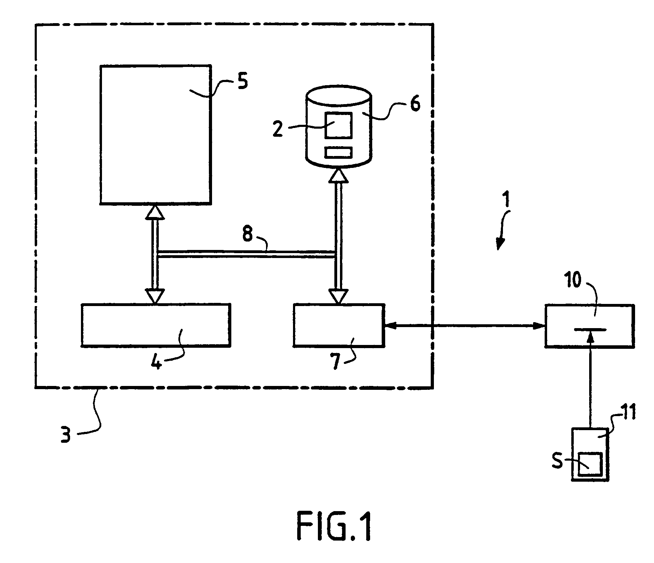

La **fig. 1** illustre un exemple de réalisation d'un dispositif **1** pour sécuriser l'utilisation d'un programme ou d'un logiciel **2** au sens général. Le dispositif de sécurisation **1** comporte un système de traitement de données **3** de tous types connus en soi. Dans l'exemple considéré, le système de traitement de données **3** constitue un ordinateur mais il doit être considéré qu'un tel système de traitement de données **3** peut faire partie intégrante de diverses machines, dispositifs ou véhicules au sens général. Dans l'exemple considéré, le système de traitement de données **3** comporte au moins un processeur **4**, au moins une mémoire de travail **5**, au moins un support de mémorisation de données **6** et au moins un circuit interface d'entrées-sorties **7**. Classiquement, les divers composants du système de traitement de données **3** sont reliés entre-eux par l'intermédiaire d'un bus de communication **8**. Le circuit interface **7** est relié à un lecteur **10** d'une unité **11** de traitement et de mémorisation d'au moins un secret. Dans l'exemple illustré, l'unité de traitement et de mémorisation est une carte à puce destinée à être écrite ou lue par le lecteur **10**, mais il doit être considéré qu'une telle unité de traitement et de mémorisation **11** peut se présenter sous la forme d'une clé matérielle de tous types, connectée sur un circuit d'entrée/sortie, directement sur le bus de communication **8**, ou par tout autre moyen de communication, tel qu'une liaison radio, par exemple. D'une manière générale, l'unité de traitement et de mémorisation **11** comporte au moins un secret ou un dispositif de mémorisation d'une information codée **S**, des moyens algorithmiques de traitement de données, et un système d'échange de données entre l'unité **11** et le système de traitement de données **3.** Classiquement, l'unité de traitement et de mémorisation **11** est réalisée par une carte à puce.

Le dispositif **1** décrit ci-dessus permet la mise en oeuvre d'un procédé pour sécuriser l'utilisation d'un logiciel **2**. Pour ce faire, la phase d'utilisation du logiciel **2** sera considérée décomposée en trois sous-phases à savoir :
- une sous-phase dite fonctionnelle au cours de laquelle l'utilisateur utilise les fonctionnalités du logiciel,
- une sous-phase de création ou de génération de données modifiées, ces données modifiées correspondant à des données originales créées ou générées par le logiciel et devant être protégées,
- et une sous-phase de reconstitution des données originales permettant l'utilisation du logiciel avec les données modifiées.

Ainsi, lorsque le dispositif **1** est utilisé dans une sous-phase de génération, un indice g est rajouté aux références des éléments constitutifs d'un tel dispositif **1**. De même, dans la phase d'utilisation, ou plus précisément de reconstitution, un indice u est rajouté aux références des éléments constitutifs de ce dispositif **1**. Il est à noter que les systèmes de traitement des données **3_{g}** et **3ᵤ** peuvent être identiques ou différents et que les unités de traitement et de mémorisation **11_{g}** et **11ᵤ** peuvent être identiques ou différentes.

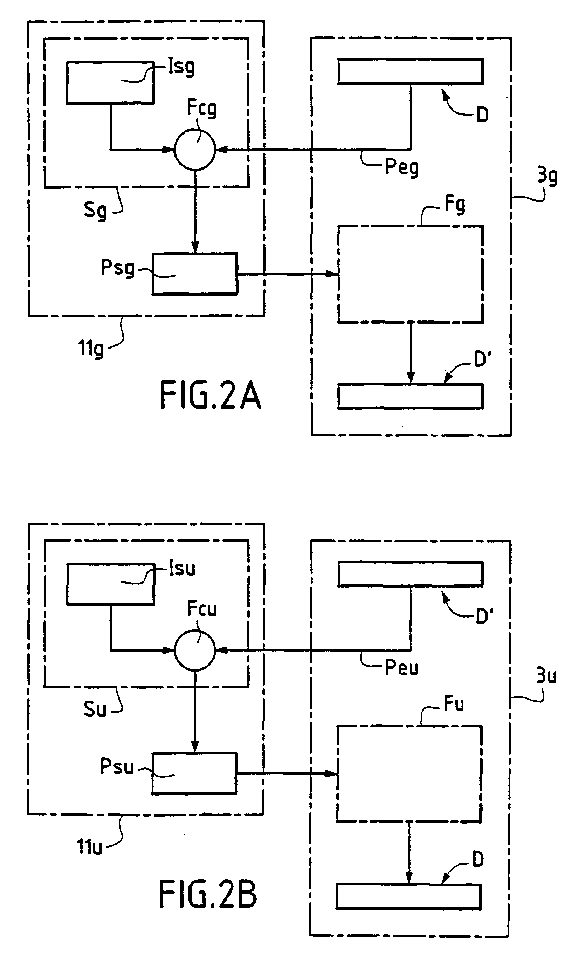

Les **fig. 2A** et **2B** illustrent un premier exemple de réalisation d'un procédé de traduction ou de codage de données associées à un logiciel déterminé. Plus précisément, la **fig. 2A** illustre la sous-phase de génération de données modifiées **D',** tandis que la **fig. 2B** décrit la sous-phase de reconstitution des données originales.

Dans la sous-phase de traitement de données, dit de génération, il est créé ou généré par le logiciel **2**, des données dites originales **D** associées au logiciel **2 (fig. 2A)**. Ces données originales **D** constituent des données devant être protégées compte tenu de leur intérêt économique. Il doit être considéré que ces données originales **D** sont des données d'échange avec le logiciel, mais ne constituent pas nécessairement des données indispensables au fonctionnement du logiciel. Ces données originales **D** peuvent constituer, par exemple, un fichier d'échange de données d'un traitement de texte ou de données d'un éditeur graphique. Au cours de cette sous-phase de génération, les données originales **D** sont modifiées pour obtenir des données modifiées **D'** qui servent de données d'échange à la place des données originales **D**. Dans la sous-phase dite de reconstitution, ces données modifiées **D'** sont retraduites pour permettre de reconstituer les données originales **D**. Le logiciel **2** est capable, dans la plupart des cas, de modifier et de reconstituer les données.

Conformément à l'invention, il est choisi un paramètre d'entrée de génération **P_{eg}** pour l'unité de traitement et de mémorisation dite de génération **11_{g},** désignée par unité de génération **11_{g}** dans la description qui suit. Dans l'exemple de réalisation illustré à la **fig. 2A,** le paramètre d'entrée de génération **P_{eg}** est constitué par au moins une partie ou la totalité des données originales **D.** Bien entendu, le paramètre d'entrée de génération **P_{eg}** peut comporter, en association avec les données originales **D**, d'autres données non associées au logiciel **2**.

Le paramètre d'entrée de génération **P_{eg}** est transféré du système de traitement de données dit de génération **3_{g}**, désigné par système de génération **3_{g}** dans la suite de la description, à l'unité de génération **11_{g}.** Cette unité de génération **11_{g}** est adaptée pour assurer la détermination d'au moins un paramètre de sortie de génération **P_{sg}** à partir d'au moins un secret de génération **S_{g}** et du paramètre d'entrée de génération **P_{eg}.** L'unité de génération **11_{g}** comporte, de façon habituelle, au moins un secret de génération **S_{g}.**

Il est à noter que le secret de génération **S_{g}** peut être constitué soit par au moins une fonction secrète, qui à partir du paramètre d'entrée de génération **P_{eg}**, génère le paramètre de sortie de génération **P_{sg},** soit par au moins une information secrète **I_{sg}** et au moins une fonction de conversion connue ou non **F_{cg},** permettant de générer à partir du paramètre d'entrée de génération **P_{eg}** et de l'information secrète **I_{sg},** le paramètre de sortie de génération **P_{sg}.** Dans les exemples illustrés, le secret de génération Sg est constitué par une information secrète **I_{sg}** et une fonction de conversion **F_{cg}.** La mise en oeuvre de l'unité de génération **11_{g}** permet, lorsque le secret de génération **S_{g}** n'est pas connu, de rendre difficile, voire impossible, la déduction du paramètre de sortie de génération **P_{sg},** à partir du paramètre d'entrée de génération **P_{eg}.**

Le paramètre de sortie de génération **P_{sg}** est transféré de l'unité de génération **11_{g}** au système de génération **3_{g}**. Le système de génération **3_{g}** est adapté pour mettre en oeuvre au moins une fonction de génération **F_{g}** utilisant, au moins en partie, le paramètre de sortie de génération **P_{sg}**, en vue d'obtenir des données modifiées **D'.** Dans l'exemple de réalisation illustré à la **fig. 2A,** la fonction de génération **F_{g}** délivre les données modifiées **D'** à partir du paramètre de sortie de génération **P_{sg}** En d'autres termes, les données modifiées **D'** correspondent au paramètre de sortie de génération **P_{sg}.**

Il est à noter que lors de la sous-phase de génération, il apparaît deux catégories d'utilisateurs. Ainsi, il est permis à une première catégorie d'utilisateurs possédant une unité de génération **11_{g}** comportant le secret de génération **S_{g}**, de traduire les données originales **D** pour obtenir des données modifiées **D'**, tandis qu'une deuxième catégorie d'utilisateurs ne possédant pas l'unité de génération **11_{g}**, c'est-à-dire le secret de génération **S_{g}**, peut au mieux générer les données originales **D** sans pouvoir les traduire pour obtenir des données modifiées **D'**.

La **fig. 2B** illustre le procédé permettant de traduire de façon inverse, les données **D'** modifiées selon le principe décrit en relation de la **fig. 2A,** afin de retrouver ou de reconstituer les données originales **D**. Ainsi, dans une telle sous-phase de reconstitution des données originales, le procédé selon l'invention est mis en oeuvre à l'aide d'un système de traitement de données dit de reconstitution **3ᵤ** identique ou différent du système de génération **3_{g}.** Le système de traitement de données de reconstitution **3ᵤ** est désigné par système de reconstitution **3ᵤ** dans la suite de la description.

Le procédé consiste à choisir un paramètre d'entrée de reconstitution **Pₑᵤ** constitué par au moins une partie des données modifiées **D'.** Dans l'exemple de réalisation illustré à la **fig. 2B,** le paramètre d'entrée de reconstitution **Pₑᵤ** comporte au moins la totalité des données modifiées **D'.**

Le paramètre d'entrée de reconstitution **Pₑᵤ** est transféré du système de reconstitution **3ᵤ** à une unité de traitement et de mémorisation, dite de reconstitution **11ᵤ** désigné par unité de reconstitution **11ᵤ** dans la suite de la description. Cette unité de reconstitution **11ᵤ** comporte au moins un secret de reconstitution **Sᵤ** qui est identique ou différent du secret de génération **S_{g},** mais qui est adapté pour permettre de retrouver ou de reconstituer les données originales **D** à partir des données modifiées **D'.** Dans l'exemple illustré, le secret de reconstitution **Sᵤ** est constitué par une information secrète **I_{Su}** et une fonction connue ou non de conversion **F_{cu}.**

L'unité de reconstitution **11ᵤ** détermine au moins un paramètre de sortie de reconstitution **Pₛᵤ** à partir du secret de reconstitution **Sᵤ** et du paramètre d'entrée de reconstitution **Pₑᵤ.** L'unité de reconstitution **11ᵤ** transfère ensuite le paramètre de sortie de reconstitution **Pₛᵤ** au système de reconstitution **3ᵤ.** Le système de reconstitution **3ᵤ** met en oeuvre au moins une fonction de reconstitution **Fᵤ** utilisant, au moins en partie, le paramètre de sortie de reconstitution **Pₛᵤ**, en vue d'obtenir les données originales **D**. Dans l'exemple de réalisation illustré à la **fig. 2B**, la fonction de reconstitution **Fᵤ** délivre les données originales **D** à partir du paramètre de sortie de reconstitution **Pₛᵤ**. En d'autres termes, selon un exemple préféré de cette variante, les données originales D correspondent au paramètre de sortie de reconstitution **Pₛᵤ.**

Selon la réalisation préférée de l'exemple illustré aux **fig. 2A** et **2B**, les données originales **D** sont transférées à l'unité de génération **11_{g}** qui délivre les données modifiées **D'**. De même, dans la sous-phase de reconstitution, les données modifiées **D'** sont transférées à l'unité de reconstitution **11ᵤ** qui délivre les données originales **D**.

De la description qui précède, il ressort qu'il peut apparaître deux catégories d'utilisateurs lors de cette sous-phase de reconstitution. Ainsi, l'utilisateur possédant une unité de reconstitution **11ᵤ**, comportant le secret de reconstitution **Sᵤ** affecté à un logiciel déterminé, peut reconstituer et utiliser les données originales associées audit logiciel. Par contre, un utilisateur ne possédant pas l'unité de reconstitution **11ᵤ** correspondante, c'est-à-dire le secret de reconstitution **Sᵤ**, peut utiliser le logiciel sans les données originales **D** et au mieux avec les données modifiées **D'**.

L'efficacité du procédé selon l'invention est réelle, même si les fonctions de conversions **F_{cg}, F_{cu}** sont connues et même si les fonctions de génération **F_{g}** et de reconstitution **Fᵤ** et les paramètres d'entrée de génération **P_{eg}** et de reconstitution **Pₑᵤ** et les paramètres de sortie de génération **P_{sg}** et de reconstitution **Pₛᵤ** sont observables et modifiables par une personne mal intentionnée. Il faut, par contre, que les secrets de génération **S_{g}** et de reconstitution **Sᵤ** soient conservés. En effet, une personne intentionnée est incapable de retrouver la modification des données **D** en **D'** et la modification inverse des données **D'** en **D**. Il est clair qu'une telle personne peut modifier le logiciel **2**, de manière à ne plus avoir besoin de l'unité de traitement et de mémorisation. Dans ce cas, les données générées par un tel logiciel piraté peuvent être utilisées par ce logiciel piraté. Néanmoins, il est impossible à ce logiciel piraté de créer des données utilisables par le logiciel **2** original ou d'utiliser des données générées par le logiciel **2** original. Les utilisateurs possédant l'unité de génération **11_{g}**, l'unité de reconstitution **11ᵤ** et le logiciel **2** peuvent s'échanger librement des données. Les utilisateurs possédant le logiciel piraté peuvent aussi s'échanger entre-eux librement des données, mais les échanges de données entre ces deux catégories d'utilisateurs sont difficiles, voire impossibles.

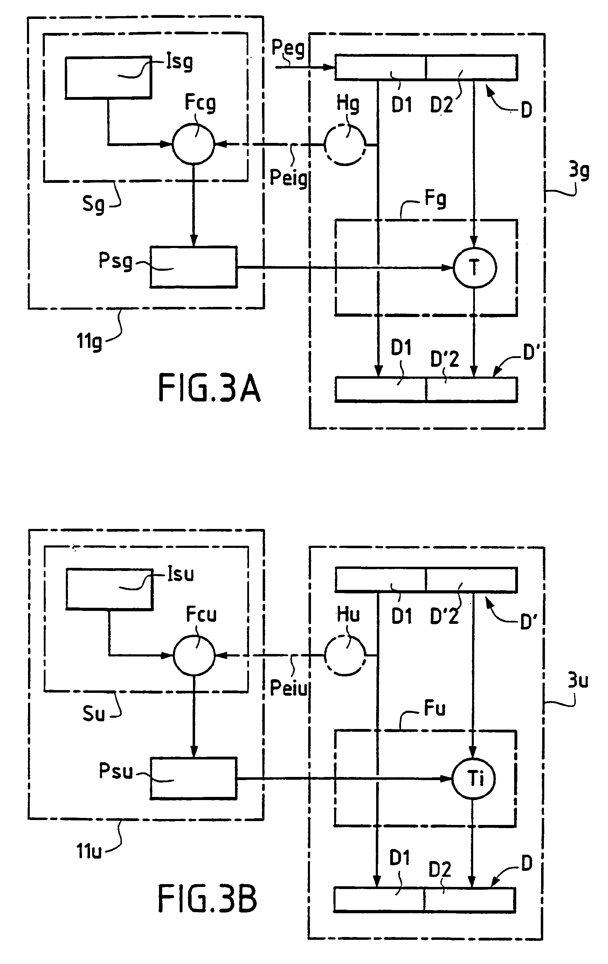

Dans l'exemple de réalisation illustré aux **fig. 2A-2B,** les données originales **D** sont transférées totalement à une unité de traitement et de mémorisation. Pour améliorer la vitesse du dispositif, les **fig. 3A-3B** décrivent une variante préférée de réalisation du procédé de sécurisation conforme à l'invention. Bien entendu, les éléments communs à l'exemple précédemment décrit conservent des références identiques et ne sont pas explicités de nouveau.

Selon cet exemple de réalisation illustré à la **fig. 3A**, il doit être considéré que les données originales **D** sont décomposées en au moins une première partie **D₁** et une deuxième partie **D₂**. Dans l'exemple de réalisation illustré à la **fig. 3A**, le paramètre de génération **P_{eg}** est constitué par la première partie **D₁** des données originales **D**. Bien entendu, la décomposition des données originales **D** en au moins deux parties est totalement arbitraire. Le paramètre d'entrée de génération **P_{eg}**, à savoir dans l'exemple illustré, la première partie **D₁** des données originales, est ainsi transféré du système de génération **3_{g}** à l'unité de génération **11_{g}**. L'unité de génération **11_{g}** détermine le paramètre de sortie de génération **P_{sg}** à partir du secret de génération **S_{g}** et de la première partie **D₁** des données.

Le paramètre de sortie de génération **P_{sg}** est transféré de l'unité de génération **11_{g}** au système de génération **3_{g}**. Les données originales **D** sont ensuite modifiées, en vue d'obtenir des données modifiées **D'**, par au moins une fonction de génération **F_{g}** comportant une fonction de traduction **T** permettant de traduire uniquement la deuxième partie **D₂** des données originales, en vue d'obtenir une deuxième partie modifiée **D'₂** des données. La fonction de traduction **T** qui peut être constituée, par exemple, par une fonction inversible, utilise le paramètre de sortie de génération **P_{sg}** pour son opération de traduction. Tel que cela ressort de la **fig. 3A,** la fonction de génération **F_{g}** est adaptée pour faire en sorte que les données modifiées **D'** comportent aussi la première partie **D₁** des données originales. Ainsi, les données modifiées **D'** sont composées par la première partie **D₁** des données originales et la deuxième partie modifiée **D'₂** des données. Les données modifiées **D'** comportent ainsi, d'une part, une partie non modifiée **D₁** ayant été utilisée pour permettre la détermination du paramètre de sortie de génération **P_{Sg}** à partir d'un secret de génération **S_{g}** et, d'autre part, une seconde partie **D'₂** codée à partir du paramètre de sortie de génération **P_{Sg.}**

La **fig. 3B** illustre le procédé permettant de traduire de façon inverse, les données **D'** modifiées selon le principe décrit en relation de la **fig. 3A**. Cette **fig. 3B** illustre ainsi la sous-phase de reconstitution des données originales **D**.

Le procédé décompose les données modifiées **D'** en une première partie et en une deuxième partie. Selon l'exemple de réalisation illustré aux **fig. 3A** et **3B,** il est choisi comme première et deuxième parties des données modifiées **D'**, respectivement la première partie **D₁** des données originales et la deuxième partie modifiée **D'₂** des données. La première partie des données modifiées **D',** à savoir **D₁,** est transférée du système de reconstitution **3ᵤ** à l'unité de reconstitution **11ᵤ.** L'unité de reconstitution **11ᵤ** assure ensuite la détermination d'au moins un paramètre de sortie de reconstitution **Pₛᵤ** à partir d'un secret de reconstitution **Sᵤ** et de la première partie des données modifiées, à savoir **D₁.**

L'unité de reconstitution **11ᵤ** assure ensuite le transfert du paramètre de sortie de reconstitution **Pₛᵤ** de l'unité de reconstitution **11ᵤ** au système de reconstitution **3ᵤ.** Le système de reconstitution **3ᵤ** assure, par une fonction de reconstitution **Fᵤ,** la modification des données modifiées **D',** en vue de revenir aux données originales **D.** La fonction de reconstitution **Fᵤ** comporte une fonction de traduction inverse **Tᵢ** qui permet de traduire la deuxième partie des données modifiées en utilisant le paramètre de sortie de reconstitution **Pₛᵤ,** en vue de revenir aux données originales **D**. Par exemple, la fonction de traduction inverse **Tᵢ** peut être constituée par la fonction inverse de la fonction de traduction T ou par une combinaison de fonctions élémentaires équivalentes. Dans l'exemple de réalisation illustré aux **fig. 3A** et **3B**, la fonction de traduction inverse **Tᵢ** utilise le paramètre de sortie de reconstitution **Pₛᵤ** pour traduire la deuxième partie modifiée **D'₂** des données, en vue de retrouver la deuxième partie **D₂** des données originales. De plus, la fonction de reconstitution **Fᵤ** est adaptée pour incorporer la première partie **D₁** des données, aux données originales **D**. Ainsi, les données originales **D** sont reconstituées par la première partie **D₁** des données originales et la deuxième partie **D₂** des données originales.

Selon une caractéristique préférée de réalisation attachée à l'exemple décrit aux **fig. 3A** et **3B,** la première partie **D₁** des données originales, destinée à être transférée à l'unité de traitement et de mémorisation, est traitée pour diminuer le nombre des opérations de traitement exécutées par ladite unité. La première partie **D₁** des données originales est ainsi fournie en entrée à au moins une fonction de traduction intermédiaire de génération **H_{g}**, telle qu'une fonction non inversible, par exemple du type "one way hash", de manière à obtenir au moins un paramètre d'entrée intermédiaire de génération **P_{eig}.** Ce paramètre d'entrée intermédiaire de génération **P_{eig}** déterminé par le système de génération **3_{g}**, est transféré par ce dernier à l'unité de génération **11g,** de manière que cette dernière puisse assurer la détermination du paramètre de sortie **P_{sg}** à partir du secret de génération Sg et du paramètre d'entrée constitué par le paramètre d'entrée intermédiaire de génération P_{eig}. Bien entendu, lors de la traduction des données modifiées **D'** pour revenir aux données originales **D** (**fig. 3B**), le système de reconstitution **3ᵤ** définit le paramètre d'entrée intermédiaire de reconstitution **Pₑᵢᵤ** à partir de la première partie **D₁** des données originales et en utilisant une fonction de traduction intermédiaire de reconstitution **Hᵤ**, telle qu'une fonction non inversible, par exemple du type "one way hash". Ce paramètre d'entrée intermédiaire de reconstitution **Pₑᵢᵤ** est transféré à l'unité de reconstitution **11ᵤ** pour permettre la détermination du paramètre de sortie de reconstitution **Pₛᵤ.**

Selon une caractéristique préférée de mise en oeuvre de l'invention, les données modifiées **D'** sont écrites ou enregistrées sur le support **6** de mémorisation de données, associé au système de traitement de données **3** pour permettre la reconstitution des données modifiées **D'** lors de la sous-phase de reconstitution du logiciel **2**. Bien entendu, le support **6** de mémorisation de données peut être constitué de toute manière connue, telle que par exemple un disque dur, une bande magnétique, un CD ROM, ou tout autre dispositif utilisé en vue d'un stockage ou d'une transmission de ces données.

Dans les exemples décrits ci-dessus, il ressort que dans la sous-phase de génération, les données modifiées sont obtenues au cours d'une étape de traitement mettant en oeuvre un paramètre de sortie de génération **P_{sg}** et un secret de génération **S_{g}**. Bien entendu, il peut être prévu de recommencer n fois cette étape de traitement pour augmenter la complexité du codage des données. Ainsi, les opérations suivantes peuvent être recommencées autant de fois que nécessaire, à savoir :
- décomposer les données modifiées précédemment obtenues en au moins une première et une deuxième parties,
- déterminer au moins un paramètre de sortie de génération à partir d'une fonction d'un ou de plusieurs secrets différents ou identiques de celui ou de ceux précédemment utilisés, et d'une partie des données,
- modifier l'autre partie des données par une fonction de traduction identique ou différente de celle précédemment utilisée,
- et constituer des données modifiées après chaque phase de modification des données.

Selon cet exemple de réalisation, lors de la sous-phase de reconstitution, les opérations de traduction des données modifiées pour reconstituer les données originales, sont recommencées dans l'ordre inverse, un nombre de fois n identique au nombre d'étapes effectuées lors de la sous-phase de génération des données modifiées.

Selon une variante préférée de réalisation de l'exemple illustré aux **fig. 3A** et **3B**, la décomposition des données originales **D** est effectuée en deux parties **D₁**, **D₂**, de tailles sensiblement équivalentes. Après une première étape de traitement, il est obtenu des données modifiées **D'** constituées par la première partie **D**₁ des données originales et la deuxième partie modifiée **D'₂** des données. Dans une deuxième étape de traitement, le rôle des parties **D₁** et **D'₂** est inversé. Ainsi, la deuxième partie modifiée **D'₂** des données est utilisée comme paramètre d'entrée de l'unité de génération **11_{g}** tandis que la première partie **D₁** des données originales est modifiée par une fonction de traduction. Il s'ensuit que l'ensemble des données originales **D** est modifié. Bien entendu, lors de la sous-phase de reconstitution, des opérations inverses sont effectuées afin de retrouver les données originales **D**.

Le procédé selon l'invention décrit ci-dessus peut être mis en oeuvre avec différentes fonctions de traduction **T** selon les objectifs souhaités par l'éditeur du logiciel protégé. Par exemple, la fonction de traduction **T** peut être une fonction de cryptage. Dans ce cas, les données traduites sont manifestement incompréhensibles. Selon un autre exemple, la fonction de traduction **T** peut être une fonction de modification mineure pseudo-aléatoire des chiffres contenus dans les données originales. De cette manière, l'utilisateur d'un logiciel piraté peut utiliser les données générées par la version originale du logiciel, mais celles-ci sont erronées. De même, un utilisateur d'un logiciel original peut utiliser les données générées par le logiciel piraté, et celles-ci sont aussi erronées.

## Revendications

1. - Procédé pour sécuriser l'utilisation d'un logiciel **(2)** à partir d'au moins une unité **(11)** de traitement et de mémorisation d'au moins un secret **(S)**, le logiciel fonctionnant sur un système de traitement de données **(3)** ayant une fonction de génération de données alors appelé système de traitement de données de génération (3g) et, ayant une fonction de reconstitution de données alors appelé système de traitement de données de reconstruction **(3u)**, **caractérisé en ce que** la phase d'utilisation du logiciel **(2)** consiste en
→ une sous-phase de génération de données modifiées **(D')** permettant
- pour une première catégorie d'utilisateurs possédant une unité de traitement et de mémorisation dite unité de génération (11g), ladite unité de génération **(11_{g})** comportant au moins un secret de génération **(S_{g})**,
• d'établir, à partir du logiciel **(2)**, des données, dites originales **(D)**, associées audit logiciel,
• de générer au moins un paramètre d'entrée de génération **(P_{eg})** constitué par au moins une partie desdites données originales **(D),**
• de transférer le paramètre d'entrée de génération **(P_{eg})** dudit système de traitement de données de génération **(3_{g})** à ladite unité de génération **(11_{g})**,
• d'assurer la détermination par ladite unité de génération **(11_{g})**, d'au moins un paramètre de sortie de génération **(P_{sg})** à partir dudit secret de génération **(S_{g})** et dudit paramètre d'entrée de génération **(P_{eg})**.
• de transférer paramètre de sortie de génération **(P_{sg})** de l'unité de génération **(11_{g})** audit système de traitement de données de génération **(3_{g})**,
• de mettre en oeuvre au moins une fonction de génération **(F_{g})** utilisant au moins en partie, ledit paramètre de sortie de génération **(P_{sg})**, en vue d'obtenir des données modifiées **(D')**,
- pour une deuxième catégorie d'utilisateurs ne possédant pas l'unité de génération **(11_{g}),** à pouvoir au mieux générer les données originales **(D)** sans pouvoir les traduire pour obtenir des données modifiées **(D')**,
→ et une sous-phase de reconstitution des données originales **(D)** permettant
- pour une première catégorie d'utilisateurs possédant une unité de traitement et de mémorisation dite unité de reconstruction **(11u)**, ladite unité de reconstitution **(11ᵤ)** comportant au moins un secret de reconstitution **(Sᵤ),** de modifier de façon inverse, les données modifiées **(D')** pour revenir aux données originales **(D)** :
• de générer un paramètre d'entrée de reconstitution **(Pₑᵤ)** constitué par au moins une partie des données modifiées **(D')**,
• de transférer ledit paramètre d'entrée de reconstitution **(Pₑᵤ)** dudit système de traitement de données de reconstitution **(3ᵤ)** à ladite unité de reconstitution **(11ᵤ)**,
• d'assurer la détermination par ladite unité de reconstitution **(11ᵤ)**, d'au moins un paramètre de sortie de reconstitution **(Pₛᵤ)** à partir dudit secret de reconstitution **(Sᵤ)** et paramètre d'entrée de reconstitution **(Pₑᵤ)**,
• de transférer ledit paramètre de sortie de reconstitution **(Pₛᵤ)** de ladite unité de reconstitution (**11ᵤ**) audit système de traitement de données de reconstitution **(3ᵤ)**,
• et en mettant en oeuvre au moins une fonction de reconstitution **(Fᵤ)** utilisant au moins en partie, le paramètre de sortie de reconstitution **(Pₛᵤ)**, en vue d'obtenir des données originales **(D)**,
- pour une deuxième catégorie d'utilisateurs ne possédant pas l'unité de reconstitution **(11ᵤ)**, à pouvoir au mieux utiliser les données modifiées **(D')**.

2. - Procédé selon la revendication 1, **caractérisé en ce qu'**il consiste :
→ dans la sous-phase de génération de données modifiées **(D')** :
- à choisir un paramètre d'entrée de génération **(P_{eg})** comportant au moins la totalité des données originales **(D)**,
- et à mettre en oeuvre une fonction de génération **(F_{g})** qui délivre les données modifiées **(D')** à partir du paramètre de sortie de génération **(P_{sg})**,
→ et dans la sous-phase de reconstitution des données originales **(D)** :
- à choisir un paramètre d'entrée d'utilisation **(Pₑᵤ)** comportant au moins en partie les données modifiées **(D')**,
- et à mettre en oeuvre, une fonction d'utilisation **(Fᵤ)** qui délivre les données originales **(D)** à partir du paramètre de sortie d'utilisation **(Pₛᵤ)**.

3. - Procédé selon la revendication 1, **caractérisé en ce qu'**il consiste :
→ dans la sous-phase de génération de données modifiées **(D')** :
- à décomposer les données originales (D) en au moins une première partie **(D₁)** et une deuxième partie **(D₂),**
- à assurer la détermination du paramètre de sortie de génération **(P_{Sg})** à partir du secret de génération **(S_{g})** et du paramètre d'entrée de génération **(P_{eg})** constitué, au moins en partie, par la première partie **(D₁)** des données originales,
- à modifier par une fonction de traduction **(T)** faisant partie de la fonction de génération **(F_{g})**, uniquement la deuxième partie **(D₂)** des données originales, en utilisant le paramètre de sortie de génération **(P_{sg})** en vue d'obtenir une deuxième partie modifiée **(D'₂)** des données,
- et à constituer les données modifiées **(D')** composées par la première partie **(D₁)** des données originales et la deuxième partie modifiée **(D'₂)** des données.

4. - Procédé selon la revendication 3, **caractérisé en ce qu'**il consiste :
→ dans la sous-phase de reconstitution des données originales **(D)** :
- à décomposer les données modifiées **(D')** en une première partie et une deuxième partie, correspondant respectivement à la première partie **(D₁)** des données originales et à la deuxième partie modifiée **(D'₂)** des données,
- à transférer, comme paramètre d'entrée de reconstitution **(Pₑᵤ),** la première partie des données modifiées **(D')** du système de traitement de données de reconstitution **(3ᵤ)** à l'unité de reconstitution **(11ᵤ),**
- à modifier la deuxième partie modifiée **(D'₂)** des données par une fonction de traduction inverse **(Tᵢ)** faisant partie de la fonction de reconstitution **(Fᵤ)**, en utilisant le paramètre de sortie de reconstitution **(Pₛᵤ)** de manière à retrouver la deuxième partie **(D₂)** des données originales,
- et à reconstituer les données originales **(D)** à partir de la première partie **(D₁)** des données originales et de ladite deuxième partie **(D₂)** des données originales.

5. - Procédé selon les revendications 3 et 4, **caractérisé en ce qu'**il consiste :
- à choisir comme paramètres d'entrée de génération **(P_{eg})** et de reconstitution **(Pₑᵤ),** des paramètres d'entrées intermédiaires respectivement de génération **(P_{eig})** et de reconstitution **(Pₑᵢᵤ)** définis à partir d'une fonction de traduction intermédiaire respectivement de génération **(H_{g})** et de reconstitution **(Hᵤ)** utilisant, au moins en partie, la première partie **(D₁)** des données originales,
- et à assurer la détermination des paramètres de sortie de génération **(P_{sg})** et de reconstitution **(Pₛᵤ)** à partir respectivement, d'une part, du secret de génération **(S_{g})** et du paramètre d'entrée intermédiaire de génération **(P_{eig})** et, d'autre part, du secret de reconstitution **(Sᵤ)** et du paramètre d'entrée intermédiaire de reconstitution **(Pₑᵢᵤ).**

6. - Procédé selon la revendication 1, **caractérisé en ce qu'**il consiste à écrire les données modifiées **(D')** sur un support **(6)** de mémorisation permanent de données, associé au système de traitement de données **(3)** pour permettre l'utilisation des données modifiées **(D')** lors de la sous-phase de reconstitution des données originales **(D)**.

7. - Procédé selon la revendication 3, **caractérisé en ce qu'**il consiste, dans la sous-phase de génération de données modifiées **(D')**, à recommencer n fois avec n ≥ 1, les opérations:
- de décomposition des données modifiées précédemment obtenues en au moins une première et deuxième parties,
- de détermination d'au moins un paramètre de sortie de génération à partir d'une fonction d'un ou de plusieurs secrets de génération différents ou identiques à ceux précédemment utilisés, et d'une partie des données,
- de modification de l'autre partie des données par une fonction de traduction identique ou différente à celle précédemment utilisée,
- et de constitution des données modifiées après chaque phase de modification des données.

8. - Procédé selon la revendication 7, **caractérisé en ce qu'**il consiste, dans la sous-phase de génération de données modifiées (D') :
- dans une première étape de traitement :
• à décomposer les données originales (D) en une première partie **(D₁)** et une deuxième partie **(D₂),**
• et à constituer des données modifiées composées par la première partie **(D₁)** des données originales et la deuxième partie modifiée **(D'₂)** des données,
- et dans une deuxième étape de traitement :
• à utiliser la deuxième partie modifiée **(D'₂)** des données, comme paramètre d'entrée de l'unité de génération **(11_{g}**) tandis que la première partie **(D₁)** des données originales est modifiée par une fonction de traduction de sorte que l'ensemble des données originales soit modifié.

9. - Procédé selon les revendications 4 et 7 ou 4 et 8, **caractérisé en ce qu'**il consiste à recommencer n fois dans l'ordre inverse avec n ≥ 1, les opérations de traduction des données modifiées pour revenir aux données originales.

10. - Dispositif pour sécuriser l'utilisation d'un logiciel **(2)** comportant au moins un système de traitement de données **(3)** auquel est associée une unité **(11)** de traitement et de mémorisation d'au moins un secret, **caractérisé en ce qu'**il comporte pendant l'utilisation dudit logiciel,
- dans une sous-phase de génération de données modifiées **(D')**,
• un système de traitement de données dit système de génération de données **(3g)** comportant :
◇ des moyens permettant d'établir à partir du logiciel **(2)**, des données dites originales **(D)** associées audit logiciel,
◇ des moyens pour générer au moins un paramètre d'entrée de génération **(P_{eg})** constitué par au moins une partie des données originales,
◇ des moyens de transfert du paramètre d'entrée de génération **(P_{eg})** du système de génération **(3_{g})** à l'unité de traitement et de mémorisation associée dite unité de génération **(11_{g}),**
◇ des moyens éxécutant au moins une fonction de génération **(F_{g})**,
• ladite unité de génération **(11_{g})** comportant :
◇ des moyens assurant la détermination d'au moins un paramètre de sortie de génération **(P_{sg})** à partir du secret de génération **(S_{g})** et du paramètre d'entrée de génération **(P_{eg}),**
◇ des moyens de transfert du paramètre de sortie de génération **(P_{sg})** de l'unité de génération **(11_{g}),** au système de génération (3g) qui utilise au moins la fonction de génération **(F_{g}),** par le biais desdits moyens l'éxécutant et au moins en partie, le paramètre de sortie de génération **(P_{sg}),** en vue d'obtenir des données modifiées **(D'),**
- et dans une sous-phase de reconstitution des données originales **(D) :**
• un système de traitement de données dit système de reconstitution de données **(3ᵤ)** qui en présence d'une unité de traitement et de mémorisation associée dite unité de reconstitution **(11ᵤ)** comportant au moins un secret de reconstitution **(Sᵤ)**, permet de revenir aux données originales **(D)** à partir des données modifiées **(D')**.

11. - Dispositif selon la revendication 10, **caractérisé en ce que** dans la sous-phase de reconstitution des données originales (**D**) :
- le système de reconstitution **(3ᵤ)** comporte :
• des moyens pour déterminer un paramètre d'entrée de reconstitution **(Pₑᵤ)** constitué par au moins une partie des données modifiées **(D')**,
• des moyens de transfert du paramètre d'entrée de reconstitution **(Pₑᵤ)** du système de reconstitution **(3ᵤ)** à l'unité de reconstitution **(11ᵤ),**
• des moyens éxécutant au moins une fonction de reconstitution **(Fᵤ),**
- ladite unité de reconstitution **(11ᵤ)** comporte :
• des moyens assurant la détermination d'au moins un paramètre de sortie de reconstitution **(Pₛᵤ)** à partir du secret de reconstitution **(Sᵤ)** et du paramètre d'entrée de reconstitution **(Pₑᵤ)**,
• des moyens de transfert du paramètre de sortie de reconstitution **(Pₛᵤ)** de l'unité de reconstitution **(11ᵤ)** au système de reconstitution **(3ᵤ)** qui utilise au moins la fonction de reconstitution **(Fᵤ)** par le biais des moyens l'éxécutant et au moins en partie, le paramètre de sortie de reconstitution **(Pₛᵤ),** en vue d'obtenir les données originales **(D)**.

## Claims

1. - A method of making secure the use of a piece of software (2) by means of at least one unit (11) for processing and storing at least one secret (S), the piece of software running on a data processing system (3) having a data generation function referred to as a generation data processing system (3_{g}) and having a data reconstitution function referred to as a reconstitution data processing system (3ᵤ), the method being **characterised in that** the stage of using the piece of software (2) consists in:
→ a substage of generating modified data (D') enabling the following:
- for a first category of user possessing a "generation" processing and memorizing unit (11_{g}), said generation unit (11_{g}) including at least one generation secret (S_{g}):
• use of the piece of software (2) to establish "original" data (D) associated with said piece of software;
• generation of at least one generation input parameter (P_{eg}) constituted by at least a portion of said original data (D);
• transfer of the generation input parameter (P_{eg}) from said generation data processing system (3_{g}) to said generation unit (11_{g}) ;
• use of said generation unit (11_{g}) to determine at least one generation output parameter (P_{sg}) from said generation secret (S_{g}) and said generation input parameter (P_{eg});
• transfer of said generation output parameter (P_{sg}) from said generation unit (11_{g}) to said generation data processing system (3_{g}) ; and
• implementation of at least one generation function (F_{g}) using at least part of said generation output parameter (P_{sg}) to obtain modified data (D');
- for a second category of user not possessing the generation unit (11_{g}) to be able at best to generate the original data (D) without being able to translate it in order to obtain modified data (D'); and
→ a substage of reconstituting original data (D) enabling,
- for a first category of user possessing a "reconstitution" processing and memorizing unit (11ᵤ), said reconstitution unit (11ᵤ) including at least one reconstitution secret (Sᵤ), the modified data (D') to be modified in inverse manner to return to the original data (D):
• generation of a reconstitution input parameter (Pₑᵤ) constituted by at least a portion of the modified data (D');
• transfer of said reconstitution input parameter (Pₑᵤ) from said reconstitution data processing system (3ᵤ) to said reconstitution unit (11ᵤ);
• use of said reconstitution unit (11ᵤ) to determine at least one reconstitution output parameter (Pₛᵤ) on the basis of said reconstitution secret (Sᵤ) and said reconstitution input parameter (Pₑᵤ);
• transfer of said reconstitution output parameter (Pₛᵤ) from said reconstitution unit (11ᵤ) to said reconstitution data processing system (3ᵤ); and
• implementation of at least one reconstitution function (Fᵤ) using at least part of the reconstitution output parameter (Pₛᵤ) in order to obtain the original data (D); and
- for a second category of user not possessing the reconstitution unit (11ᵤ), to be able at best to use the modified data (D').

2. - A method according to claim 1, **characterised in that** it consists:
→ in the substage of generating modified data (D'):
- in selecting a generation input parameter (P_{eg}) comprising at least all of the original data (D); and
- in implementing a generation function (F_{g}) which delivers the modified data (D') from the generation output parameter (P_{sg}); and
→ in the substage of reconstituting original data (D):
- in selecting a reconstitution input parameter (Pₑᵤ) comprising at least part of the modified data (D'); and
- in implementing a reconstitution function (Fᵤ) which delivers the original data (D) from the reconstitution output parameter (Pₛᵤ).

3. - The method according to claim 1, **characterised in that** it consists:
→ in the substage of generating modified data (D'):
- in splitting the original data (D) into at least a first portion (D₁) and a second portion (D₂);
- in determining the generation output parameter (P_{sg}) from the generation secret (S_{g}) and the generation input parameter (P_{eg}) which is constituted, at least in part, by the first portion (D₁) of the original data;
- in using a translation function (T) forming a portion of the generation function (F_{g}) to modify only the second portion (D₂) of the original data, using the generation output parameter (P_{sg}) to obtain a modified second portion (D'₂) of the data; and
- in constituting the modified data (D') made up of the first portion (D₁) of the original data and the modified second portion (D'₂) of the data.

4. - The method according to claim 3, **characterised in that** it consists:
→ in the substage of reconstituting the original data (D):
- in splitting the modified data (D') into a first portion and a second portion corresponding respectively to the first portion (D₁) of the original data and to the modified second portion (D'₂) of the data;
- in transferring the first portion of the modified data (D') as the reconstitution input parameter (Pₑᵤ) from the reconstitution data processing system (3ᵤ) to the reconstitution unit (11ᵤ);
- in modifying the modified second portion (D'₂) of the data by means of an inverse translation function (Tᵢ) forming part of the reconstitution function (Fᵤ), using the reconstitution output parameter (Pₛᵤ) so as to recover the second portion (D₂) of the original data; and
- in reconstituting the original data (D) from the first portion (D₁) of the original data and said second portion (D₂) of the original data.

5. - A method according to claims 3 and 4, **characterised in that** it consists:
- in selecting as the generation input parameter (P_{eg}) and the reconstitution input parameter (Pₑᵤ), respectively the generation and reconstitution intermediate input parameters (P_{eig}, Pₑᵢᵤ) obtained by respectively the generation and reconstitution intermediate translation functions (H_{g}, Hᵤ) using at least part of the first portion (D₁) of the original data; and
- in determining the generation and reconstitution output parameters (P_{sg}, Pₛᵤ) respectively firstly from the generation secret (S_{g}) and from the generation intermediate input parameter (P_{eig}) and secondly from the reconstitution secret (Sᵤ) and from the reconstitution intermediate input parameter (Pₑᵢᵤ).

6. - A method according to claim 1, **characterised in that** it consists in writing the modified data (D') on a permanent data storage medium (6) associated with the data processing system (3) to enable the modified data (D') to be used during the substage of reconstituting the original data (D).

7. - A method according to claim 3, **characterised in that** it consists, in the substage of generating modified data (D') in repeating the following operations n times, where n ≥ 1:
- splitting the previously obtained modified data into at least first and second portions;
- determining at least one generation output parameter from a function of one or more generation secrets that are different from or identical to those used previously, and from a portion of the data;
- modifying the other portion of the data by a translation function that is identical to or different from that used previously; and
- making up modified data after each data modification stage.

8. - A method according to claim 7, **characterised in that** it consists, in the substage of generating modified data (D'):
- in a first processing step:
• in splitting the original data (D) into a first portion (D₁) and a second portion (D₂), and
• in making up modified data comprising the first portion (D₁) of the original data and the modified second portion (D'₂) of the data;
- and in a second processing step:
• in using the modified second portion (D'₂) of the data as an input parameter for the generation unit (11_{g}) while the first portion (D₁) of the original data is modified by a translation function such that all of the original data is modified.

9. - A method according to claims 4 and 7 or claims 4 and 8, **characterised in that** it consists in repeating the operations of translating the modified data n times, where n ≥ 1, in the reverse order in order to obtain the original data.

10. - Apparatus for securing the use of a piece of software (2), the apparatus comprising at least a data processing system (3) associated with a unit (11) for processing and storing at least one secret, the apparatus being **characterised in that** it comprises during the use of said piece of software,
- in a substage of generating modified data (D');
• a "generation" data processing system (3_{g}) comprising:
◇ means enabling "original" data associated with the piece of software (2) to be established using said piece of software;
◇ means for generating at least a generation input parameter (P_{eg}) constituted by at least a portion of the original data;
◇ means for transferring the generation input parameter (P_{eg}) from the generation system (3_{g}) to the associated "generation" processing and memorizing unit (11_{g}); and
◇ means executing at least one generation function (F_{g}) ;
• said generation unit (11_{g}) comprising:
◇ means for determining at least one generation output parameter (P_{sg}) from the generation secret (S_{g}) and the generation input parameter (P_{eg}); and
◇ means for transferring the generation output parameter (P_{sg}) from the generation unit (11_{g}) to the generation system (3_{g}) which uses at least the generation function (F_{g}) by means of said means executing it and at least part of the generation output parameter (P_{sg}) to obtain modified data (D');
- and in a substage of reconstituting the original data (D):
• a "reconstitution" data processing system (3ᵤ) which, in the presence of an associated "reconstitution" processing and memorizing unit (11ᵤ) including at least one reconstitution secret (Sᵤ) enables the original data (D) to be restored from the modified data (D'),

11. **-** Apparatus according to claim 10, **characterised in that**, in the substage of reconstituting the original data (D):
- the reconstitution system (3ᵤ) comprises:
• means for determining a reconstitution input parameter (Pₑᵤ) constituted by at least a portion of the modified data (D');
• means for transferring the reconstitution input parameter (Pₑᵤ) from the reconstitution system (3ᵤ) to the reconstitution unit (11ᵤ); and
• means executing at least one reconstitution function (Fᵤ);
- said reconstitution unit (11ᵤ) comprises:
• means for determining at least one reconstitution output parameter (Pₛᵤ) from the reconstitution secret (Sᵤ) and the reconstitution input parameter (Pₑᵤ); and
• means for transferring the reconstitution output parameter (Pₛᵤ) from the reconstitution unit (11ᵤ) to the reconstitution system (3ᵤ) which uses at least the reconstitution function (Fᵤ) by means of said means executing it and at least a portion of the reconstitution output parameter (Pₛᵤ) to obtain the original data (D).

## Patentansprüche

1. Verfahren zur Sicherung der Anwendung einer Software (2) mittels wenigstens einer Einheit (11) zur Verarbeitung und Speicherung wenigstens eines Geheimnisses (S), wobei die Software auf einem Datenverarbeitungssystem (3) arbeitet, das eine Funktion zum Generieren von Daten aufweist und in diesem Fall als Datenverarbeitungssystem zur Generierung (3g) bezeichnet wird, und das eine Funktion zum Wiederherstellen von Daten aufweist und in diesem Fall als Datenverarbeitungssystem zum Wiederherstellen (3ᵤ) bezeichnet wird, **dadurch gekennzeichnet, daß** die Phase der Anwendung der Software (2) in folgendem besteht:
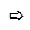 einer Unterphase zur Generierung modifizierter Daten (D'), die
- für eine erste Kategorie von Usern, welche eine Einheit zur Verarbeitung und Speicherung, sogenannte Generierungseinheit (11_{g}) besitzen, wobei die genannte Generierungseinheit (11_{g}) wenigstens ein Generierungsgeheimnis (S_{g}) umfaßt, ermöglicht,
• mittels der Software (2) sogenannte Originaldaten (D) zu erstellen, die der Software zugeordnet sind,
• wenigstens einen Generierungseingabeparameter (P_{eg}) zu generieren der von wenigstens einem Teil der Originaldaten (D) gebildet ist,
• den Generierungseingabeparameter (P_{eg}) von dem Datenverarbeitungssystem zur Generierung (3_{g}) an die Generierungseinheit (11_{g}) zu übertragen,
• die Bestimmung wenigstens eines Generierungsausgabeparameters (P_{sg}) durch die Generierungseinheit (11_{g}) anhand des Generierungsgeheimnisses (S_{g}) und des Generierungseingabeparameters (P_{eg}) sicherzustellen,
• den Generierungsausgabeparameter (P_{sg}) von der Generierungseinheit (11_{g}) an das Datenverarbeitungssystem zur Generierung (3_{g}) zu übertragen,
• wenigstens eine Generierungsfunktion (F_{g}) auszuführen, die wenigstens teilweise den Generierungsausgabeparameter (P_{sg}) verwendet, um modifizierte Daten (D') zu erhalten,
- für eine zweite Kategorie von Usern, die nicht im Besitz der Generierungseinheit (11_{g}) sind, ermöglicht, die Originaldaten (D) bestmöglich zu generieren, ohne sie übersetzen zu können, um modifizierte Daten (D') zu erhalten,
sowie in einer Unterphase zur Wiederherstellung der Originaldaten (D), die
- für eine erste Kategorie von Usern, welche eine Einheit zur Verarbeitung und Speicherung, sogenannte Wiederherstellungseinheit (11ᵤ) besitzen, wobei die Wiederherstellungseinheit (11ᵤ) wenigstens ein Wiederherstellungsgeheimnis (Sᵤ) umfaßt, ermöglicht, die modifizierten Daten (D') rückwärts zu modifizieren, um zu den Originaldaten (D) zurückzugelangen:
• einen Wiederherstellungseingabeparameter (Pₑᵤ) zu generieren, der von wenigstens einem Teil der modifizierten Daten (D') gebildet ist,
• den Wiederherstellungseingabeparameter (Pₑᵤ) von dem Datenverarbeitungssystem zur Wiederherstellung (3ᵤ) an die Wiederherstellungseinheit (11ᵤ) zu übertragen,
• die Bestimmung wenigstens eines Wiederherstellungsausgabeparameters (Pₛᵤ) durch die Wiederherstellungseinheit (11ᵤ) anhand des Wiederherstellungsgeheimnisses (Sᵤ) und des Wiederherstellungseingabeparameters (Pₑᵤ) sicherzustellen,
• den Wiederherstellungsausgabeparameter (Pₛᵤ) von der Wiederherstellungseinheit (11ᵤ) an das Datenverarbeitungssystem zur Wiederherstellung (3ᵤ) zu übertragen,
• und wenigstens eine Wiederherstellungsfunktion (Fᵤ) auszuführen, die wenigstens teilweise den Wiederherstellungsausgabeparameter (Pₛᵤ) verwendet, um Originaldaten (D) zu erhalten,
- für eine zweite Kategorie von Usern, die nicht im Besitz der Wiederherstellungseinheit (11ᵤ) sind, ermöglicht, die modifizierten Daten (D') bestmöglich zu verwenden.

2. Verfahren nach Anspruch 1, **dadurch gekennzeichnet, daß** es darin besteht:
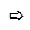 in der Unterphase zur Generierung modifizierter Daten (D'):
- einen Generierungseingabeparameter (P_{eg}) zu wählen, der wenigstens die Gesamtheit der Originaldaten (D) umfaßt,
- und eine Generierungsfunktion (F_{g}) auszuführen, welche die modifizierten Daten (D') anhand des Generierungsausgabeparameters (P_{sg}) liefert.
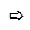 und in der Unterphase zur Wiederherstellung der Originaldaten (D):
- einen Anwendungseingabeparameter (Pₑᵤ) zu wählen, der wenigstens teilweise die modifizierten Daten (D') umfaßt,
- und eine Anwendungsfunktion (Fᵤ) auszuführen, welche die Originaldaten (D) anhand des Anwendungsausgabeparameters (Pₛᵤ) liefert.

3. Verfahren nach Anspruch 1, **dadurch gekennzeichnet, daß** es darin besteht:
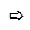 in der Unterphase zur Generierung modifizierter Daten (D'):
- die Originaldaten (D) in wenigstens einen ersten Teil (D₁) und einen zweiten Teil (D₂) zu zerlegen,
- die Bestimmung des Generierungsausgabeparameters (P_{sg}) anhand des Generierungsgeheimnisses (S_{g}) und des Generierungseingabeparameters (P_{eg}), der wenigstens teilweise von dem ersten Teil (D₁) der Originaldaten gebildet ist, sicherzustellen,
- durch eine Übersetzungsfunktion (T), welche Teil der Generierungsfunktion (F_{g}) ist, lediglich den zweiten Teil (D₂) der Originaldaten unter Verwendung des Generierungsausgabeparameters (P_{sg}) zu verändern, um einen zweiten modifizierten Teil (D'₂) der Daten zu erhalten,
- und die modifizierten Daten (D') herzustellen, die aus dem ersten Teil (D₁) der Originaldaten und dem modifizierten zweiten Teil (D'₂) der Daten bestehen.

4. Verfahren nach Anspruch 3, **dadurch gekennzeichnet, daß** es darin besteht:
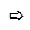 in der Unterphase zur Wiederherstellung der Originaldaten (D):
- die modifizierten Daten (D') in einen ersten Teil und einen zweiten Teil zu zerlegen, die dem ersten Teil (D₁) der Originaldaten bzw. dem modifizierten zweiten Teil (D'₂) der Daten entsprechen,
- als Wiederherstellungseingabeparameter (Pₑᵤ) den ersten Teil der modifizierten Daten (D') vom Datenverarbeitungssystem zur Wiederherstellung (3ᵤ) an die Wiederherstellungseinheit (11ᵤ) zu übertragen,
- den modifizierten zweiten Teil (D'₂) der Daten durch eine Funktion zur Rückwärtsübersetzung (Tᵢ), welche Teil der Wiederherstellungsfunktion (Fᵤ) ist, unter Verwendung des Wiederherstellungsausgabeparameters (Pₛᵤ) derart zu modifizieren, daß der zweite Teil (D₂) der Originaldaten wieder gefunden wird,
- und die Originaldaten (D) anhand des ersten Teils (D₁) der Originaldaten und des zweiten Teils (D₂) der Originaldaten wieder herzustellen,

5. Verfahren nach den Ansprüchen 3 und 4, **dadurch gekennzeichnet, daß** es darin besteht:
- als Generierungseingabeparameter (P_{eg}) und Wiederherstellungseingabeparameter (Pₑᵤ) einen Zwischengenerierungseingabeparameter (P_{eig}) bzw. einen Zwischenwiederherstellungseingabeparameter (Pₑᵢᵤ) zu wählen, die anhand einer Zwischenübersetzungsfunktion zur Generierung (Hg) bzw. einer Zwischenübersetzungsfunktion zur Wiederherstellung (Hᵤ) definiert werden,
- die wenigstens teilweise den ersten Teil (D₁) der Originaldaten verwenden,
- und die Bestimmung des Generierungsausgabeparameters (P_{sg}) und des Wiederherstellungsausgabeparameters (Pₛᵤ) anhand einerseits des Generierungsgeheimnisses (S_{g}) und des Zwischengenerierungseingabeparameters (P_{eig}) bzw. anhand andererseits des Wiederherstellungsgeheimnisses (Sᵤ) und des Zwischenwiederherstellungseingabeparameters (Pₑᵢᵤ) sicherzustellen.

6. Verfahren nach Anspruch 1, **dadurch gekennzeichnet, daß** es darin besteht, die modifizierten Daten (D') auf einen Träger (6) zum permanenten Speichern von Daten zu schreiben, der dem Datenverarbeitungssystem (3) zugeordnet ist, um die Verwendung der modifizierten Daten (D') während der Unterphase zur Wiederherstellung der Originaldaten (D) zu ermöglichen.

7. Verfahren nach Anspruch 3, **dadurch gekennzeichnet, daß** es darin besteht, in der Unterphase zur Generierung modifizierter Daten (D') die nachfolgenden Arbeitsschritte n-mal, mit n ≥ 1, emeut zu beginnen:
- das Zerlegen der zuvor erhaltenen modifizierten Daten in wenigstens einen ersten und einen zweiten Teil,
- das Bestimmen wenigstens eines Generierungsausgabeparameters anhand einer Funktion eines oder mehrerer Generierungsgeheimnisse, die von den zuvor verwendeten abweichen oder mit diesen identisch sind, sowie eines Teils der Daten,
- das Modifizieren des anderen Teils der Daten durch eine Übersetzungsfunktion, die mit der zuvor verwendeten identisch ist oder von dieser abweicht,
- und das Herstellen der modifizierten Daten nach jeder Phase der Modifikation der Daten.

8. Verfahren nach Anspruch 7, **dadurch gekennzeichnet, daß** es darin besteht, in der Unterphase zur Generierung modifizierter Daten (D'):
- in einem ersten Verarbeitungsschritt:
• die Originaldaten (D) in einen ersten Teil (D₁) und einen zweiten Teil (D₂) zu zerlegen,
• und modifizierte Daten herzustellen, die von dem ersten Teil (D₁) der Originaldaten und dem modifizierten zweiten Teil (D'₂) der Daten gebildet sind,
- und in einem zweiten Verarbeitungsschritt:
• den modifizierten zweiten Teil (D'₂) der Daten als Eingabeparameter der Generierungseinheit (11_{g}) zu verwenden, während der erste Teil (D₁) der Originaldaten durch eine Übersetzungsfunktion modifiziert wird, so daß die gesamten Originaldaten modifiziert werden.

9. Verfahren nach den Ansprüchen 4 und 7 oder 4 und 8, **dadurch gekennzeichnet, daß** es darin besteht, die Arbeitsschritte zur Übersetzung der modifizierten Daten n-mal, mit n ≥ 1, in umgekehrter Reihenfolge erneut zu beginnen, um zu den Originaldaten zurückzugelangen.

10. Vorrichtung zur Sicherung der Anwendung einer Software (2) mit wenigstens einem Datenverarbeitungssystem (3), dem eine Einheit (11) zur Verarbeitung und Speicherung wenigstens eines Geheimnisses zugeordnet ist, **dadurch gekennzeichnet, daß** sie während der Anwendung der genannten Software,
- in einer Unterphase zur Generierung modifizierter Daten (D') folgendes umfaßt,
• ein Datenverarbeitungssystem, sogenanntes Datengenerierungssystem (3_{g}), mit:
◆ Mitteln, die ermöglichen, anhand der Software (2) sogenannte Originaldaten (D) zu erstellen, die der Software zugeordnet sind,
◆ Mitteln, um wenigstens einen Generierungseingabeparameter (P_{eg}) zu generieren, der von wenigstens einem Teil der Originaldaten gebildet ist,
◆ Mitteln für das Übertragen des Generierungseingabeparameters (P_{eg}) von dem Generierungssystem (3_{g}) an die zugeordnete Einheit zur Verarbeitung und Speicherung, die sogenannte Generierungseinheit (11g),
◆ Mitteln, die wenigstens eine Generierungsfunktion (F_{g}) ausführen,
• die genannte Generierungseinheit (11_{g}) mit:
◆ Mitteln, welche die Bestimmung wenigstens eines Generierungsausgabeparameters (P_{sg}) anhand des Generierungsgeheimnisses (S_{g}) und des Generierungseingabeparameters (P_{eg}) sicherstellen,
◆ Mitteln für die Übertragung des Generierungsausgabeparameters (P_{sg}) von der Generierungseinheit (11_{g}) an das Generierungssystem (3_{g}), das wenigstens die Generierungsfunktion (F_{g}) mittels der sie ausführenden Mittel und wenigstens zum Teil den Generierungsausgabeparameter (P_{sg}) verwendet, um modifizierte Daten (D') zu erhalten,
- und in einer Unterphase zur Wiederherstellung der Originaldaten (D) folgendes umfaßt:
• ein Datenverarbeitungssystem, sogenanntes Datenwiederherstellungssystem (3ᵤ), das in Anwesenheit einer zugeordneten Einheit zur Verarbeitung und Speicherung, sogenannten Wiederherstellungseinheit (11ᵤ), die wenigstens ein Wiederherstellungsgeheimnis (Sᵤ) umfaßt, ermöglicht, anhand der modifizierten Daten (D') zu den Originaldaten (D) zurückzugelangen.

11. Vorrichtung nach Anspruch 10, **dadurch gekennzeichnet, daß** in der Unterphase zur Wiederherstellung der Originaldaten (D):
- das Wiederherstellungssystem (3ᵤ) folgendes umfaßt:
• Mittel zum Bestimmen eines Wiederherstellungseingabeparameters (Pₑᵤ), der von wenigstens einem Teil der modifizierten Daten (D') gebildet ist,
• Mittel für die Übertragung des Wiederherstellungseingabeparameters (Pₑᵤ) von dem Wiederherstellungssystem (3ᵤ) an die Wiederherstellungseinheit (11ᵤ),
• Mittel, die wenigstens eine Wiederherstellungsfunktion (Fᵤ) ausführen,
- die genannte Wiederherstellungseinheit (11ᵤ) folgendes umfaßt:
• Mittel, welche die Bestimmung wenigstens eines Wiederherstellungsausgabeparameters (Pₛᵤ) anhand des Wiederherstellungsgeheimnisses (Sᵤ) und des Wiederherstellungseingabeparameters (Pₑᵤ) sicherstellen,
• Mittel für die Übertragung des Wiederherstellungsausgabeparameters (Pₛᵤ) von der Wiederherstellungseinheit (11ᵤ) an das Wiederherstellungssystem (3ᵤ), das wenigstens die Wiederherstellungsfunktion (Fᵤ) mittels der sie ausführenden Mittel und wenigstens teilweise den Wiederherstellungsausgabeparameter (Pₛᵤ) verwendet, um die Originaldaten (D) zu erhalten.
